# EUROPEAN PATENT APPLICATION

(11) **EP 1 568 282 A1**
(43) Date of publication of application: **31.08.2005**
(21) Application number: 04004406.7
(22) Date of filing: 26.02.2004
(51) Int. Cl.: A23K 1/16, A23K 1/18, A01K 7/00, B65D 1/22

(54) **Beverage containing water and a breath freshener for pet animals**

(71) Applicant: Stevens, Nina, 1223 Cologny (CH)
(72) Inventor: Stevens, Nina, 1223 Cologny (CH)
(74) Representative: Grosfillier, Philippe

(57) **Abstract**

A dose of dog, cat, puppy and kitty water wherein said water comprises a breath freshener.

## Description

The present invention concerns water doses for puppies, kitties, cats and dogs.

It is known in the art to provide animal food for controlling malodorous breath of said animals.

For example, US patent 6,265,011, the content of which is incorporated by reference in the present application with respect to the ingredients mentioned, discloses a dog biscuit for controlling malodorous breath of dogs.

Other known prior art publications include the following US patents 4,294,857; 4,774,098; 4,800,099; 4,997,671; 5,000,973; 5,015,485; 5,094,870; 5,095,008; 5,405,836; 5,976,549; 5,552,176; 5,955,123 and 5,989,604.

The disadvantage of all these known means is that they are solid food such biscuits, treats or snacks that the animal, e.g. the puppy, kitty, dog or cat, may refuse to eat after a certain time, for example because of the taste of this food. The animal may even accept to eat biscuits only of a given brand and refuse the others.

In addition, such food may also provoke other problems, such as digestive problems.

It is therefore an aim of the present invention to improve the means that are at disposition to control malodorous breath of animals in particular kittens, puppies, cats and dogs.

A further aim of the invention is to provide a means that is easily accepted by kittens, puppies, cats and dogs.

A further aim is to provide a liquid dose, such as a water dose, for kittens, puppies, cats and dogs.

A further aim of the present invention is to provide a dog and cat water, puppy and kitty water dose in a transportable means.

It is a further aim of the invention to provide a transportable means that is reusable.

According to the invention, the water dose comprises a breath freshener. The breath freshener preferably comprises deionized water, oxygen (stabilized chlorine dioxide), zinc, acetate, sodium citrate, chlorophyllin-copper complex, sodium benzoate, sodium hydroxide and citric acid.

In addition, the water may comprise vitamins. In a further embodiment, the water further comprises anti-oxydants with or without vitamins.

An advantage of the water as defined in the present invention is that it has no specific smell or taste. Therefore the problems arising with biscuits and solid food as mentioned above do no occur in the present invention.

The invention also relates to a transportable means, such as a bowl, containing water according to the invention.

Preferably said bowl is made of plastic material and comprises a lid for hermetically closing the bowl in order to allow its transport without spilling.

In a variant, the bowl is made of metal.

Preferably, the bowl is disposable.

In another embodiment, the bowl is sealed with its lid and can be opened just before use. The sealing between the bowl and the lid can be made by known means, such a glueing, heat sealing etc.

The shape of bowl can be square, round, oval, and of any other suitable shape. The color may also be varied.

## Claims

1. A dose of dog, cat, puppy and kitty water wherein said water comprises a breath freshener.

2. A dose of water as claimed in claim 1, wherein said breath freshener comprises deionized water and/or oxygen (stabilized chlorine dioxide) and/or zinc and/or acetate and/or sodium citrate and/or chlorophyllin-copper complex and/or sodium benzoate and/or sodium hydroxide and/or citric acid.

3. A dose of water as claimed in claims 1 for 2, wherein said water further comprises fluoride.

4. A dose of water as claimed in one of claims 1 to 3, wherein said water comprises vitamins.

5. A dose of water as claimed in one of claims 1 to 4, wherein said water comprises anti-oxydants.

6. A bowl containing water as defined in one of the preceding claims, wherein said bowl comprises a lid and is hermetically closed with said lid in order to be transportable.

7. A bowl as claimed in claim 6, wherein said bowl is made of plastic material.

8. A bowl as claimed in claim 7, wherein said bowl is made of metal.

9. A bowl as claimed in one of claims 6 to 8, wherein said bowl is disposable.

10. A bowl as claimed in one of claims 5 to 9, wherein said bowl is sealed before use with said lid.
